# EUROPEAN PATENT APPLICATION

(11) **EP 4 454 951 A1**
(43) Date of publication of application: **30.10.2024**
(21) Application number: 24163382.5
(22) Date of filing: 13.03.2024
(51) Int. Cl.: B60R 7/04

(54) **CONSOLE BOX FOR VEHICLE AND VEHICLE**

(30) Priority: 23.04.2023 CN 202310442991
(71) Applicant: Stellantis Auto SAS, 78300 Poissy (FR)
(72) Inventor: WANG, ZI YE, SHANGHAI, 200030 (CN); ZHANG, HAIWEI, SHANGHAI, 200030 (CN)

(57) **Abstract**

A console box for a vehicle including a receiving cavity (20), the receiving cavity (20) having a bottom plate (202) that is provided with one or more through holes (203); and a deflector plate (24), the deflector plate (24) surrounding the one or more through holes (203), and the deflector plate (24) being configured to extend downwards from a lower surface (205) of the bottom plate (202) and away from the bottom plate (202) of the receiving cavity (20). According to the console box for a vehicle of the present application, the liquid spilled into the receiving cavity (20) flows out of the through hole (203) under gravity and further flows downward along the deflector plate (24) to leave the receiving cavity (20), so that the drained liquid does not flow back up to the bottom plate (202). Thus, failure of electronic components caused by liquid dripping onto the electronic components which are arranged below the bottom plate (202) can be avoided.

## Description

### RELATED FIELD

The present application relates to the technical field of vehicles, and in particular to a console box for a vehicle. The present application further relates to a vehicle having the same.

### BACKGROUND

A console box is arranged in the middle of the front seats and/or the rear seats of a vehicle to place articles such as beverage bottles. In order to improve the user's use experience, a rubber pad is laid on a bottom plate of the console box. In addition, multiple holes are constructed in the bottom plate of the console box. During traveling of the vehicle, the beverage bottle placed in the console box may shake or even topple over, causing the liquid in the beverage bottle to spill out. The spilled liquid leaves the console box through the holes in the bottom plate. For example, the patent document US10449897B2 discloses a cup holder for a vehicle. The cup holder disclosed therein includes a main body, a light guide lens and a mat. The main body is provided with an inwardly recessed cup cavity. The light guide lens is arranged on the bottom plate of the cup cavity, and the mat is arranged on the light guide lens. The bottom plate of the cup cavity and the light guide lens are both provided with through holes, and two through holes facing each other form a drainage gap. When liquid is spilled into the cup cavity, it leaves the cup cavity through the drainage gap.

However, part of the liquid drained from the console box diffusely flows under surface tension along the surface of the bottom plate facing away from the rubber pad, and further drips onto the electronic components arranged below the console box, causing failure of the electronic components.

### SUMMARY

Regarding the above technical problems, a first aspect of the present application proposes a console box for a vehicle. The console box for a vehicle includes: a receiving cavity, the receiving cavity having a bottom plate that is provided with one or more through holes; and a deflector plate, the deflector plate surrounding the one or more through holes, and the deflector plate being configured to extend downwards from a lower surface of the bottom plate and away from the bottom plate of the receiving cavity.

In an embodiment, an end surface of the deflector plate facing away from the bottom plate is configured as an inclined surface.

In an embodiment, the end surface of the deflector plate facing away from the bottom plate is provided with at least one drip head pointing downwards.

In an embodiment, the deflector plate includes one or more ring plates, each of the ring plates being configured to surround at least one of the one or more through holes.

In one embodiment, the deflector plate includes an annular outer plate and an annular inner plate; the inner plate is located at an inner side of the outer plate and spaced apart from the outer plate; and the one or more through holes are located between the outer plate and the inner plate.

In an embodiment, an upper surface, opposite to the lower surface, of the bottom plate is provided with one or more blocking ribs each surrounding at least one of the one or more through holes; or the upper surface is provided with one blocking rib, whereby the one or more through holes are located on an inner side of the blocking rib.

In an embodiment, the console box for a vehicle further includes a pad arranged in the receiving cavity and placed on the upper surface of the bottom plate.

In an embodiment, the pad includes a mating surface in contact with the upper surface of the bottom plate; the mating surface is provided with one or more flexible connectors; each of the one or more connectors is paired with the corresponding through hole; and the each of the one or more connectors is directed through and connected to the corresponding through hole.

In one embodiment, each of the one or more connectors is provided with a flange; the deflector plate is spaced apart from an edge of the through hole, so that a connecting region surrounding the through hole is formed; and the respective connector is directed through the corresponding through hole, so that the flange is snapped onto the connecting region.

In an embodiment, a downward extension length of the deflector plate is greater than a downward extension length of the connector.

A second aspect of the present application proposes a vehicle. The vehicle includes: a vehicle body in which at least one seat is provided; the console box for a vehicle according to the previous description, the console box being arranged to be adjacent to the at least one seat; and at least one electronic module which is arranged below the bottom plate of the receiving cavity and is away from the deflector plate.

The beneficial effects of the present application are as follows. In the console box for a vehicle according to the present application, the bottom plate of the receiving cavity is provided with a through hole, and a deflector plate surrounding the through hole is provided on a lower surface of the bottom plate. The deflector plate extends downward. In this way, the liquid spilled into the receiving cavity flows out of the through hole under gravity and further flows downward along the deflector plate to leave the receiving cavity, so that the drained liquid does not flow back up to the bottom plate. Thus, the case that the liquid diffusely flows along the lower surface of the bottom plate to the region corresponding to the electronic components is avoided, and thus failure of the electronic components caused by liquid dripping onto the electronic components is avoided.

### BRIEF DESCRIPTION OF THE DRAWINGS

The accompanying drawings described herein are used for providing a further understanding of the present application, and constitute a part of the present application. Exemplary embodiments of the present application and descriptions thereof are used for explaining the present application, and do not constitute any inappropriate limitation to the present application. In the drawings:
FIG. 1 schematically shows a vehicle according to an embodiment of the present application;
FIG. 2 schematically shows a console box for a vehicle according to an embodiment of the present application;
FIG. 3 is a cross-sectional view of a portion of the console box;
FIG. 4 schematically shows the positional relationship of a connector and a deflector plate;
FIG. 5 schematically shows a lower surface of a bottom plate of a receiving cavity of the console box.
FIG. 6 schematically shows a cross-sectional view of the deflector plate according to an embodiment, in which the positional relationship between a blocking rib and a through hole is shown;
FIG. 7 schematically shows the deflector plate according to another embodiment;
FIG. 8 schematically shows a mating surface of a pad; and
FIG. 9 schematically shows the positional relationship between the blocking rib and the through hole according to another embodiment.

### DETAILED DESCRIPTION

In order to make the objects, technical solutions, and advantages of the present application clearer, the technical solutions in the embodiments of the present application are described clearly and completely in conjunction with the specific embodiments and corresponding drawings of the present application hereinafter. It is apparent that the described embodiments are only some rather than all embodiments of the present application. Based on the embodiments of the present application, all other embodiments obtained by those of ordinary skill in the art without any creative work fall within the scope of protection of the present application.

It should be understood that in the present application, the directional term "down" refers to a direction substantially pointing to the ground, and the directional term "up" refers to a direction substantially away from the ground. The "axial direction" of a cylindrical or tubular member refers to a direction substantially parallel to the central axis of such member; and the "lateral direction" of a cylindrical or tubular member refers to a direction substantially perpendicular to the axial direction.

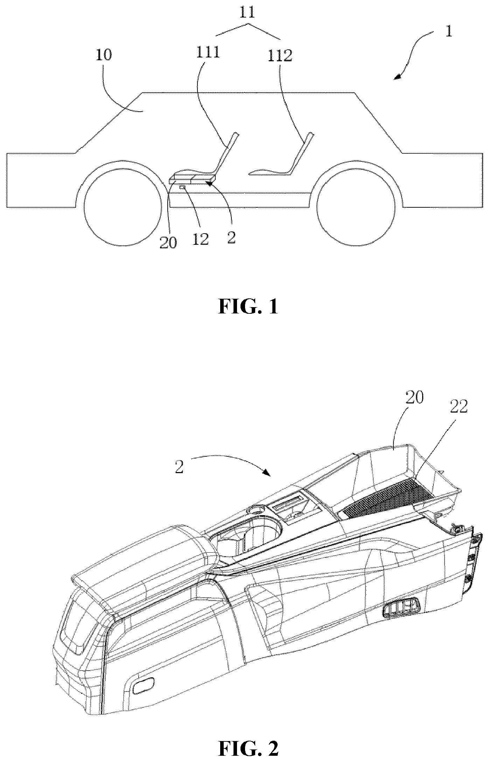

FIG. 1 schematically shows a vehicle 1 according to an embodiment of the present application. As shown in FIG. 1, the vehicle 1 includes a vehicle body 10, a console box 2 for a vehicle (hereinafter referred to as storage compartment 2) and an electronic module 12. A seat 11 is provided in the vehicle body 10. For example, the seat 11 may include two front seats 111 and multiple rear seats 112. The storage compartment 2 is arranged to be adjacent to the seat 11 (for example, the storage compartment 2 is arranged between the two front seats 111). The storage compartment 2 includes a receiving cavity 20 into which passengers may place articles such as beverage bottles as needed. The electronic module 12 is arranged below the receiving cavity 20. The electronic module 12 may, for example, include an electrical parking brake module, which is well known to those skilled in the art and will not be repeated here.

The storage compartment 2 will be described below with reference to FIGS. 2 to 8.

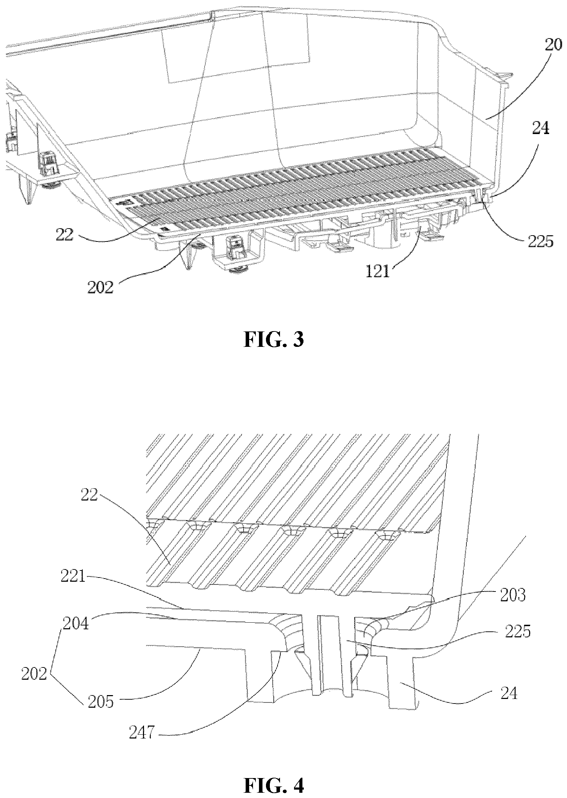

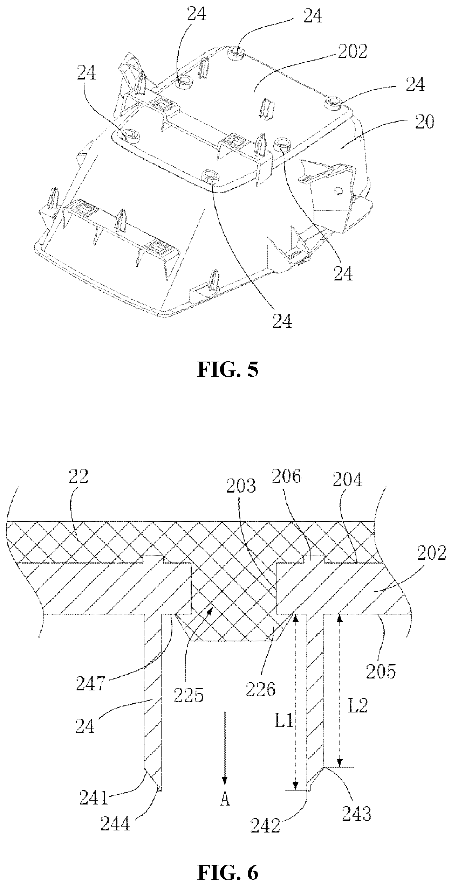

As shown in FIGS. 2 and 3, the storage compartment 2 includes a receiving cavity 20 and a deflector plate 24. Specifically, as shown in FIG. 4, the receiving cavity 20 has a bottom plate 202 that is provided with one or more through holes 203. As further shown in FIGS. 4, 6 and 7, the deflector plate 24 surrounds the one or more through holes 203. As further shown in FIG. 5, the deflector plate 24 is configured to extend downwards from a lower surface 205 of the bottom plate 202 and away from the bottom plate 202 of the receiving cavity 20.

The electronic module 12 is arranged below the bottom plate 202 and is away from the deflector plate 24. For example, as shown in FIG. 3, the electronic module 12 is arranged in an electronic module installation region 121 located below the bottom plate 202. In other words, the one or more through holes 203 are surrounded inside the deflector plate 24, while the electronic module 12 is located outside the deflector plate 24.

In accordance with the storage compartment 2 of the present application, when liquid is accidentally spilled into the receiving cavity 20 (for example, a beverage bottle shakes or topples over so that the liquid is spilled into the receiving cavity 20), it flows onto an upper surface 204 of the bottom plate 202 and further flows out of the receiving cavity 20 through the through holes 203. The liquid drained from the receiving cavity 20 further flows downward under gravity along the deflector plate 24 to leave the bottom plate 202 (or the receiving cavity 20), and does not flow back up to the lower surface 205 of the bottom plate 202. Thus, the liquid does not diffusely flow along the lower surface 205 of the bottom plate 202 to the region corresponding to the electronic component 12, so that failure of the electronic component 12 caused by liquid dripping onto the electronic component 12 is avoided.

In an embodiment, as shown in FIGS. 2 and 3, the console box further includes a pad 22. The pad 22 is arranged in the receiving cavity 20 and placed on the upper surface 204 of the bottom plate 202 that is opposite to the lower surface 205. In this way, the pad 22 can reduce the impact on the articles in the receiving cavity 20, protect these articles, and also improve the user's use experience. In addition, when the liquid is accidentally spilled into the receiving cavity 20, part of the liquid flows to the space between the pad 22 and the upper surface 204 of the bottom plate 202, and then flows out of the receiving cavity 20 through the through holes 203. In this case, as described above, the deflector plate 24 prevents the fluid from flowing back up to the lower surface 205 of the bottom plate 202, and thus the case that the liquid diffusely flows along the lower surface 205 of the bottom plate 202 to the region corresponding to the electronic component 12 is further avoided, so that failure of the electronic component 12 caused by liquid dripping onto the electronic component 12 is avoided.

In an embodiment, the pad 22 is made of flexible ethylene propylene diene monomer rubber (that is, EPDM rubber). Of course, the pad 22 may also be made of other flexible materials, which will not be repeated here.

In an embodiment, as shown in FIGS. 4 and 5, the deflector plate 24 includes one or more ring plates each configured to surround one through hole 203. In other words, one deflector plate 24 is provided for each through hole 203. For example, as shown in FIG. 5, the bottom plate 202 is provided with six through holes 203. Correspondingly, six deflector plates 24 are provided, and each deflector plate 24 surrounds one corresponding through hole 203. In such configuration, each deflector plate 24 only guides flow of the liquid from the through hole 203 itself surrounds. In an embodiment, the deflector plate 24 is coaxial with the corresponding through hole 203. In other embodiments, one deflector plate 24 may also surround two or more through holes 203. Thus, the deflector plate 24 is shared by those through holes 203.

Optionally, as shown in FIG. 6, an end surface 241 of the deflector plate 24 facing away from the bottom plate 202 is configured as an inclined surface. In other words, the end surface 241 is at an angle to the axial direction A of the deflector plate 24. The inclined end surface 241 guides the liquid to quickly gather at the lowest point of the end surface 241 and then drip, so that the liquid quickly leaves the bottom plate 202, which further avoids the upward back flow of the liquid along the deflector plate 24.

In a specific embodiment, as further shown in FIG. 6, the first distance L1 between an inner edge 242 of the inclined end surface 241 and the lower surface 205 of the bottom plate 202 is greater than the second distance L2 between an outer edge 243 of the inclined end surface 241 and the lower surface 205 of the bottom plate 202 (that is, the inner edge 242 is lower than the outer edge 243). In this way, the liquid quickly gathers at the inner edge 242 of the end surface 241. It should be understood that the end surface 241 may also be configured into other shapes. For example, the outer edge 243 is lower than the inner edge 242. The outer edge 243 may also be configured to have substantially the same length as the inner edge 242, but the middle portion of the end surface 241 protrudes downward beyond the outer edge 243 and the inner edge 242 (that is, the length of the middle portion of the end surface 241 is greater than the length of the outer edge 243 and the inner edge 242). Of course, the end surface 241 may also be configured as a plane as needed.

Optionally, as further shown in FIG. 6, the end surface 241 of the deflector plate 24 is provided with at least one drip head 244 pointing downwards. In other words, the drip head 244 is configured as a protrusion protruding downward from the end surface 241. With such configuration, the drip head 244 guides the droplets to drop in a predetermined direction, which prevents the droplets from randomly splashing and thereby prevents the droplets from splashing onto the electronic module 12 or other components.

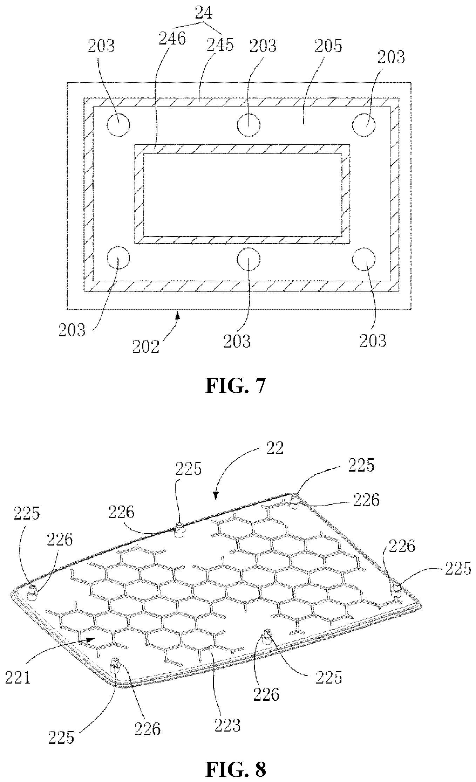

In another embodiment, as shown in FIG. 7, the deflector plate 24 includes an annular outer plate 245 and an annular inner plate 246. The inner plate 246 is located radially inside the outer plate 245 and spaced radially from the outer plate 245. In this case, the one or more through holes 203 are located between the outer plate 245 and the inner plate 246. With such configuration, the outer plate 245 and the inner plate 246 both serve to guide flow of the liquid. In the case that the bottom plate 202 is provided with multiple through holes 203, the outer plate 245 and the inner plate 246 may be shared by these through holes 203, so that there is no need to provide a separate deflector plate for each through hole 203, simplifying the manufacturing of the storage compartment 2. It should be understood that the end surfaces of the outer plate 245 and/or the inner plate 246 may be configured into the inclined surface as previously described, and may be further provided with the drip head as previously described, which will not be repeated here.

Optionally, the length of the deflector plate 24 is between 4 mm and 7 mm. The deflector plate 24 of such length is sufficient to guide the liquid to flow away from the receiving cavity 20, and the liquid does not flow back onto the bottom plate 202. In addition, such deflector plate 24 is relatively short and occupies a small space, which facilitates the assembly of the storage compartment 2 in the vehicle body 10. It should be understood that, in the case that the deflector plate 24 includes the inner plate 246 and the outer plate 245, the inner plate 246 and the outer plate 245 each have an extension length ranging from 4 mm to 7 mm. Of course, those skilled in the art can also configure the deflector plate 24 into other length dimensions according to the actual needs.

In an embodiment, the deflector plate 24 is integrally formed with the bottom plate 202 of the receiving cavity 20, for example, by injection molding. Of course, the deflector plate 24 and the bottom plate 202 of the receiving cavity 20 may also be formed separately and then connected together.

Optionally, as further shown in FIG. 6, a blocking rib 206 surrounding the through hole 203 is provided on the upper surface 204 of the bottom plate 202. The blocking rib 206 protrudes from the upper surface 204, opposite to the lower surface 205, of the bottom plate 202 (in other words, the blocking rib 206 protrudes toward the pad 22). The blocking rib 206 blocks the liquid between the pad 22 and the upper surface 204 of the bottom plate 202 from flowing into the through hole 203, thereby reducing the liquid flowing out of the receiving cavity 20 through the through hole 203, which also prevents the liquid from dripping onto the electronic component 12 arranged below the bottom plate 202. Furthermore, due to the blocking effect of the blocking rib 206, the liquid flowing out of the receiving cavity 20 and entering the vehicle body 10 is reduced or even eliminated, which is particularly advantageous because the liquid entering the vehicle body 10 is difficult to clean. It should be understood that, in the case of providing the blocking rib 206, the passenger can timely clean the liquid spilled into the receiving cavity 20 to minimize the liquid flowing into the through hole 203.

In an embodiment, the protrusion dimension of the blocking rib 206 is between 0.3 mm and 0.5 mm. In this way, the protrusion dimension of the blocking rib 206 is small and does not affect the laying of the pad 22 on the bottom plate 202.

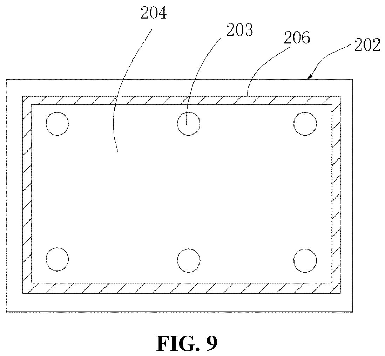

In an embodiment, the blocking rib 206 may surround only one through hole 203 (as shown in FIG. 6). In other embodiments, the blocking rib 206 may surround multiple through holes 203. In addition, it is also applicable to provide only one blocking rib 206 which surrounds the multiple through holes 203 (as shown in FIG. 9). Those are readily known to those skilled in the art and will not be described here.

Optionally, the pad 22 includes a mating surface 221 in contact with the upper surface 204 of the bottom plate 202. As shown in FIG. 8, the mating surface 221 is provided with one or more flexible connectors 225. Each connector 225 is directed through and connected to the corresponding through hole 203. Thus, the pad 22 can be firmly mounted on the bottom plate 202.

In an embodiment, as shown in FIG. 5, the bottom plate 202 is substantially rectangular, and three through holes 203 are arranged at intervals along each long edge of the bottom plate 202. Correspondingly, the pad 22 is also substantially rectangular, and three connectors 225 are arranged at intervals along each long edge of the pad 22 (as shown in FIG. 8). Of course, those skilled in the art can also configure the bottom plate 202 into other shapes according to the actual situation, and provide other numbers of the through holes on the bottom plate 202. Consequently, the shape of the pad 22 and the number of the connectors 225 are changed accordingly.

In an embodiment, as further shown in FIG. 8, the mating surface 221 of the pad 22 is further provided with a pattern 223. The pattern 223 improves the friction between the pad 22 and the bottom plate 202, thereby further improving the firmness of the pad 22 on the bottom plate 202.

Optionally, as shown in FIG. 6, each connector 225 is provided with a flange 226. The deflector plate 24 is spaced apart from an edge of the through hole 203, so that a connecting region 247 surrounding the through hole 203 is formed. Thus, when the connector 225 is directed through the through hole 203, the flange 226 is squeezed so as to pass through the through hole 203. The flange 226 automatically expands and snaps onto the connecting region 247 after it is directed through the through hole 203, thereby achieving a stable connection between the connector 225 and the through hole 203. Thus, the pad 22 is stably arranged on the bottom plate 202.

In an embodiment, the width of the connecting region 247 is between 3 mm and 5 mm. The connecting region 247 of such size ensures that the flange 226 can be stably snapped onto the connecting region 247. Furthermore, the overall lateral dimension of the deflector plate 24 is not too large with respect to the through hole 203, which facilitates the assembly of the storage compartment 2 in the vehicle body 10.

Optionally, as shown in FIGS. 4 and 6, a downward extension length of the deflector plate 24 is greater than a downward extension length of the connector 225. Overall, the connector 225 is located inside the deflector plate 24 along the axial direction of the connector 225, so that the deflector plate 24 protects the connector 225 from accidentally pushing the connector 225 out of the through hole 203. Further, since the connector 225 is located inside the deflector plate 24, the insertion of the connector 225 into the through hole 203 during the assembly of the pad 22 is not hindered by other components located at the lower surface 205 of the bottom plate 202, which facilitates the assembly of the pad 22. In an embodiment, the downward extension length of the deflector plate 24 is 5 mm, and the downward extension length of the connector 225 is 3mm. It should be understood that the downward extension length of the deflector plate 24 may also be equal to or smaller than the downward extension length of the connector 225, depending on the actual situation.

Listing of reference numerals:
1 vehicle
10 vehicle body
11 seat
111 front seat
112 rear seat
12 electronic module
121 electronic module installation region
2 console box for a vehicle
20 receiving cavity
202 bottom plate
203 through hole
204 upper surface of the bottom plate
205 lower surface of the bottom plate
206 blocking rib
22 pad
221 mating surface of the pad
223 pattern
225 connector
226 flange
24 deflector plate
241 end surface
242 inner edge
243 outer edge
244 drip head
245 outer plate
246 inner plate
247 connecting region
A axial direction of the deflector plate
L1 first distance
L2 first distance

The above only describes the embodiments of the present application and is not intended to limit the present application. For those skilled in the art, various modifications and changes can be made to the present application. Any modifications, equivalent substitutions or improvements made within the spirit and principle of the present application shall fall within the scope of protection defined by the appended claims of the present application.

## Claims

1. A console box for a vehicle, comprising:
a receiving cavity (20), the receiving cavity (20) having a bottom plate (202) that is provided with one or more through holes (203); and
a deflector plate (24), the deflector plate (24) surrounding the one or more through holes (203), and the deflector plate (24) being configured to extend downwards from a lower surface (205) of the bottom plate (202) and away from the bottom plate (202) of the receiving cavity (20).

2. The console box according to claim 1, wherein an end surface (241) of the deflector plate (24) facing away from the bottom plate (202) is configured as an inclined surface.

3. The console box according to claim 1, wherein an end surface (241) of the deflector plate (24) facing away from the bottom plate (202) is provided with at least one drip head (244) pointing downwards.

4. The console box according to any one of claims 1 to 3, wherein the deflector plate (24) comprises one or more ring plates, each of the ring plates being configured to surround at least one of the one or more through holes (203).

5. The console box according to any one of claims 1 to 3, wherein the deflector plate (24) comprises an annular outer plate (245) and an annular inner plate (246); the inner plate (246) is located at an inner side of the outer plate (245) and spaced apart from the outer plate (245); and the one or more through holes (203) are located between the outer plate (245) and the inner plate (246).

6. The console box according to claim 1, wherein an upper surface (204), opposite to the lower surface (205), of the bottom plate (202) is provided with one or more blocking ribs (206) each surrounding at least one of the one or more through holes (203); or the upper surface (204) is provided with one blocking rib (206), and the one or more through holes (203) are located on an inner side of the blocking rib (206).

7. The console box according to claim 6, wherein the console box further comprises a pad (22), the pad (22) being arranged in the receiving cavity (20) and placed on the upper surface (204).

8. The console box according to claim 7, wherein the pad (22) comprises a mating surface (221) in contact with the upper surface (204) of the bottom plate (202); the mating surface (221) is provided with one or more flexible connectors (225); and each of the one or more connectors (225) is directed through and connected to the corresponding through hole (203).

9. The console box according to claim 8, wherein each of the one or more connectors (225) is provided with a flange (226);
the deflector plate (24) is spaced apart from an edge of the through hole (203), so that a connecting region (247) surrounding the through hole (203) is formed; and the flange (226) is snapped onto the connecting region (247).

10. The console box according to claim 8, wherein a downward extension length of the deflector plate (24) is greater than a downward extension length of the connector (225).

11. A vehicle, comprising:
a vehicle body (10) in which at least one seat (11) is provided;
the console box (2) for a vehicle according to any one of claims 1 to 10, the console box (2) being arranged to be adjacent to the at least one seat (11); and
at least one electronic module (12) which is arranged below the bottom plate (202) of the receiving cavity (20) and is away from the deflector plate (24).
